# EUROPEAN PATENT APPLICATION

(11) **EP 4 764 958 A1**
(43) Date of publication of application: **24.06.2026**
(21) Application number: 24383413.2
(22) Date of filing: 19.12.2024
(51) Int. Cl.: G06N 3/08, H04B 17/391, H04W 16/18

(54) **METHOD, SYSTEM AND COMPUTER PROGRAM FOR COMPUTING RADIO COVERAGE MAPS**

(71) Applicant: Telefonica Innovacion Digital SL, 28050 Madrid (ES)
(72) Inventor: Almasan Puscas, Felician Paul, 28050 Madrid (ES); Suárez-Varela Maciá, José, 28050 Madrid (ES); BAKIRTZIS ALEXANDRAKIS, STEFANOS SOTIRIOS, 28050 Madrid (ES); GERACI, GIOVANNI, 28050 Madrid (ES); Lutu, Andra Elena, 28050 Madrid (ES)
(74) Representative: Carlos Hernando, Borja

(57) **Abstract**

A method, system and computer program for computing radio coverage maps. The method comprises generating a geographic area scene including an antenna, several buildings surrounding the antenna, and receivers; obtaining a 3D coverage map for the scene using a neural network that converts the geographic area scene to a point cloud with different types of points, including a point for the antenna, coverage points covering the scene and building points capturing the buildings' location and dimensions; converts each point into a node, providing an antenna node, building nodes, and coverage nodes; connects the single antenna node and the coverage nodes to all the building nodes; encodes each node type and records an orientation of each node using both an alpha and beta angle; and defines edges of the 3D coverage map using different features capturing a relationship between connected nodes.

## Description

### TECHNICAL FIELD

The present invention relates to a method, system, and computer program for computing radio coverage maps.

### BACKGROUND OF THE INVENTION

Graph Neural Networks (GNNs) are a class of neural networks designed to operate on graph-structured data. Unlike traditional neural networks that work with grid-like data such as images or sequences, GNNs can capture the relationships and interactions between nodes in a graph, making them particularly suitable for tasks involving complex structures like social networks, molecular graphs, and, in the invention's case, wireless network environments.

Message Passing Neural Networks (MPNN) [17] are a family of GNNs which operate through a series of message-passing steps. In each step, nodes in the graph exchange information with their neighbors to update their own states. This process can be broken down into two main phases:
- Message Passing Phase: During this phase, each node sends a message to its neighbors. The message typically contains information about the node's current state and is computed using a message function. This function can be designed to capture various aspects of the node's features and its relationship with neighboring nodes.
- Aggregation Phase: Once the messages are received, each node aggregates the incoming messages from its neighbors. This aggregation can be done using various methods such as summation or averaging. The aggregated message is then used to update the node's state through an update function. Typically, the update function is implemented with a recurrent neural network or a multi-layer perceptron (MLP).

The iterative process of message passing, and aggregation allows the MPNN to learn rich representations of the nodes and the overall graph structure. By capturing the dependencies and interactions between nodes, MPNNs can effectively model complex environments, making them ideal for generating realistic coverage maps.

Several commercial solutions, such as ATOLL [1] and Wirelesslnsite [2], leverage physics-based signal propagation models to generate coverage maps. These methods, including the recently emerged open-source library Sionna [3], rely on ray tracing [4] to simulate how radio waves reflect, diffract and get scattered off objects in the environment. Ray tracing-based simulations incorporate the antenna location and all the surrounding building shapes and positions to account for signal blockage and attenuation.

Similarly, the research community started to investigate the use of data-driven interpolation methods to predict coverage maps. These methods assume that partial path loss measurements are given, and they estimate the path loss at the locations where the measurements are missing. In [5] they propose a Gaussian Process Regression method to reconstruct coverage maps. The work from [6] is based on coupled tensor decomposition method to recover coverage maps. Other works rely on kernel methods to reconstruct coverage maps from path loss measurements [7].

In the last years, methods based on Machine Learning techniques have been studied for estimating coverage maps. In [8] they propose RadioUnet, a method based on convolutional neural networks (CNN) that learns to estimate the propagation path loss from a given transmitter to any point in a 2D scenario. In [9] they also use CNNs but they propose a transformation from antenna parameters and maps to images. The images are fed to the CNN as different channels of the same input sample and the CNN outputs the path loss matrix where each element corresponds to a pixel. The work from [10] uses Random Forests to predict signal strength maps. More recently, the work from [11] proposes RadioGAT, a method based on graph attention networks for multi-band radio map reconstruction. They focus on radio map interpolation across multiple frequencies for a specific geographical area.

More sophisticated methods based on generative models also showed good level of performance for predicting coverage maps. The work from [12] proposes a new training framework based on conditional generative adversarial networks (GAN) for radio map estimation from sparse radio frequency measurements. In [13] they transform the problem of power spectrum map estimation to an image reconstruction task. Then, they leverage GANs to reconstruct the images and obtain the final power maps. In [14] they propose to use the Transformers architecture to predict the coverage map. They designed a new embedding technique to better capture the relative position of radiation source, destination and environment.

Some patents and patent applications are also known in this field. For instance, WO2016130827A1 "RSRP and path loss measurements with coverage enhancements", CN112469066A "5G network coverage evaluation method and device", US20150350923A1 "Network coverage planning method and apparatus of evolution communication system", CN114025372A "5G RSRP calculation method and system based on MR data", CN114630359A "Method, device, electronic equipment and computer storage medium for determining network coverage", WO2022193757A1 "Network coverage prediction method and device, and computer readable storage medium", CN115334523A "Network coverage measuring and calculating method, device, equipment and computer readable storage medium, US11843958B2 "Method and system for enhancing cellular network coverage".

Traditional ray tracing techniques are typically used in existing commercial solutions for simulating signal propagation. While being powerful and accurate, they face significant challenges when applied to radio coverage map prediction. These methods are computationally intensive and impractical for real-time network optimization or for large area predictions. The complexity increases exponentially with the number of reflections and diffractions considered, making it difficult to scale urban environments with numerous buildings and obstacles. Finally, ray tracing simulations tend to simplify the representation of the real-world by assuming the same material for all buildings or removing objects such as trees or cars that directly impact the effective coverage map.

Recent advancements in mobile network coverage prediction have predominantly relied on CNNs. While these approaches have shown promise, they are inherently limited by their image-centric processing paradigm. CNNs treat coverage maps as 2D images, with environmental features represented as different channels of the image. This methodology fails to fully capture the complex three-dimensional nature of signal propagation in urban environments. The fixed kernel size in CNNs restricts their ability to model long-range dependencies and complex spatial relationships between network elements and environmental features. Moreover, CNNs struggle to effectively represent and process non-grid-like data structures. As the size and complexity of coverage areas increase, CNN models face significant challenges in maintaining accuracy while remaining computationally feasible. Finally, methods based on images or CNNs suffer from having poor generalization capabilities when evaluated on different cities not seen during the training process. This is because such architectures exploit spatial correlations between the pixels of the image/grid, failing to capture relational information such as antenna orientation, building heights or radiation patterns, among others.

### DESCRIPTION OF THE INVENTION

To solve the drawbacks of the prior art, the object of present invention is to provide a new solution that computes radio coverage maps based on a novel graph representation for 3D buildings and uses a neural network, for instance, a GNN, to process the graph representation. The graph representation method represents the 3D real-world environment of the geographic area where the prediction is to be made into a point cloud. In this representation, each point is a node, and edges connect these nodes in such a way that all nodes within the graph are reachable. This representation allows the neural network to effectively process the 3D real-world environment and learn the complex interactions between transmitted signals and the environment. Ultimately, the neural network outputs a signal strength value at specific locations corresponding to receiver locations.

According to one aspect, the present invention proposes a method for computing radio coverage maps. The method comprises performing by one or more processors the following steps: generating at least one geographic area scene by combining a first dataset comprising information regarding location, orientation, and/or configuration information of different antennas deployed in a given area with a second dataset comprising details about a real environment of the given area, wherein the generated geographic area scene comprises a single antenna, several buildings surrounding the antenna, and a plurality of receivers; and obtaining a 3D coverage map for the at least one geographic area scene using a neural network that converts the geographic area scene to a point cloud with different types of points, including a point for the single antenna, a coverage point for each receiver covering the geographic area scene and building points capturing the buildings' location and dimensions; converts each point of the point cloud into a node, providing an antenna node, building nodes, and coverage nodes as a result; connects the single antenna node and the coverage nodes to all the building nodes; encodes each node type using a one-hot vector, and records an orientation of each node using both an alpha and beta angle; and defines edges of the 3D coverage map using different features that capture a relationship between connected nodes.

According to the invention, the neural network comprises a Graph Neural Network (GNN). In other embodiments, it comprises a Transformer or a Graph Attention Network.

In some embodiments, the neural network further comprises attaching spatial information and features, including materials and antenna configuration, to the points of the point cloud.

In some embodiments, during training of the neural network, the method further comprises generating a received signal strength, RSS, map for the at least one geographic area scene by simulating the propagation of radio waves within the at least one geographic area scene using a ray tracing simulation tool.

In some embodiments, RSS values of the RSS map are obtained individually, for each receiver or coverage point at a time.

In some embodiments, for the antenna nodes, the orientation reflects the antenna's radiation direction; the building nodes are oriented by a vector perpendicular to a building's surface; and the coverage nodes are assigned a fixed orientation pointing upwards along a positive z-axis.

In some embodiments, all types of edges in the 3D coverage map comprise: a type of edge including antenna-to-coverage, antenna-to-building, or building-to-coverage that is identified using a one-hot encoding or the like; the distance between the nodes, the angle alpha (i.e. angle of edge with the XY plane) and angle beta (i.e. angle of edge with ZY plane) formed by their respective orientations, and a free-space path loss (FSPL), which is based on the distance between nodes.

In some embodiments, the antenna-to-building edges also comprise a feature corresponding to an intersection of the edge with an antenna radiation pattern. Similarly, the antenna-to-coverage edges also comprise the feature corresponding to the intersection of the edge with the antenna radiation pattern and a line-of-sight flag feature, which indicates if the nodes are connected by a direct path or not).

In some embodiments, the method further associates a tunable hyperparameter to each node.

In some embodiments, the method further pads the nodes with zeros.

In some embodiments, an antenna radiation pattern feature is obtained by tracing a link from the antenna node to the building or coverage node and by taking an antenna gain from the intersection as a feature.

In some embodiments, before obtaining the RSS maps, the at least one geographic area scene is converted to a specific file format and further exported to a specific simulation format. In some embodiments, the several buildings are obtained from a (crowd-sourced or payable) mapping platform that contains a shape, location and material of the buildings.

Other embodiments of the invention that are disclosed herein also include a system and software programs to perform the method embodiment steps and operations summarized above and disclosed in detail below. More particularly, a computer program product is one embodiment that has a computer-readable medium including computer program instructions encoded thereon that when executed on at least one processor in a computer system/device causes the processor to perform the operations indicated herein as embodiments of the invention.

The present invention offers several significant advantages. First, the neural network-based ray tracer outperforms traditional ray tracing techniques by being faster at computing coverage maps.

Another advantage of the proposed method is its superior performance compared to traditional neural network-based coverage map predictions. Unlike prior approaches that treat the scene as a two-dimensional image, the graph representation employed here captures critical phenomena such as scattering, reflection, and diffraction of electromagnetic waves in three-dimensional spaces. This results in a more accurate and realistic prediction of coverage maps.

Another advantage is the model's ability to generalize across different scenes. Once trained, the proposed model can be applied to various scenarios without requiring re-training, providing a versatile tool for diverse use cases.

The flexibility of the graph-based representation also allows for the seamless integration of additional scene features into the neural network. For example, properties such as building materials, antenna types, and receiver orientations can be appended to the nodes, enabling the model to learn from more complex and realistic scenarios.

Finally, the architecture supports training directly on empirical measurements instead of relying solely on simulations. By substituting simulated labels with real-world empirical data, the model can achieve a more realistic and accurate representation of the environment.

### BRIEF DESCRIPTION OF THE DRAWINGS

The previous and other advantages and features will be more fully understood from the following detailed description of embodiments, with reference to the attached figures, which must be considered in an illustrative and non-limiting manner, in which:
Fig. 1 illustrates a Received Signal Strength (RSS) map for a scene with two buildings. The white parts indicate that there is a building, explaining why there are no RSS values.
Fig. 2 schematically illustrates an overview of the data collection and processing steps executed by the proposed method, according to an embodiment of the present invention.
Fig. 3 is a graph representation of a scene with two buildings, the coverage map and a single antenna located on the upper part of the image.

### DETAILED DESCRIPTION OF THE INVENTION AND OF PREFERRED EMBODIMENTS

Present invention defines a scene as a geographic area that includes a transmitter (antenna), the buildings surrounding the transmitter, and numerous receivers. In some embodiments, the building information is sourced from a crowd-sourced mapping platform, such as OpenStreetMap [15], a free crowd-sourced mapping platform, and it contains the shape, location and material of the buildings. Note that other street map platforms providing detailed information about geographical regions and sites worldwide can be equally used.

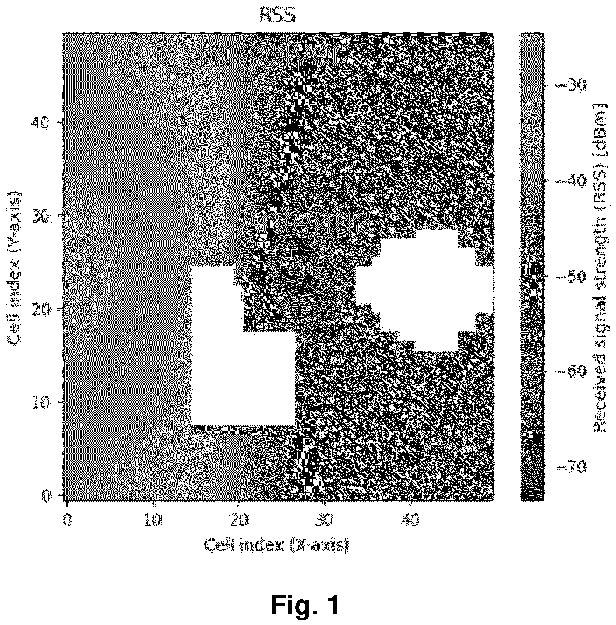

In the scenes there is a single transmitter that has a location, orientation, and configuration with its antenna radiation pattern. The scene is used to simulate the propagation of radio waves using a ray tracing simulator. Particularly, in some embodiments, the present invention uses the open-source Sionna RT [16] simulator, a differentiable simulation tool based on ray tracing. The result of a simulation is a Received Signal Strength (RSS) map as depicted in Fig. 1.

Instead of predicting the entire coverage map at once with a neural network, the process is simplified by predicting the RSS for a single receiver at a time. Since the proposed solution is based on neural networks and allows for sub-second inference times, generating the full coverage map involves iterating over all receiver points in the scene and launching the inference. This approach, together with the parallelization capabilities of neural networks, enables efficient and scalable computation of coverage maps while maintaining high accuracy.

In the following, the different steps/phases executed/implemented by the present invention are further detailed.

### Data collection

The initial stage of the proposed method involves extracting pertinent information from the real-world environment. For this, two datasets are used: the antenna deployment dataset (or first dataset) and the world environment dataset (or second dataset). The former comprises the locations and configurations of actual antennas deployed in a given area/country. The latter includes details about the real-world environment, which includes building shapes, locations, materials, and more, obtained from the mapping platform dataset.

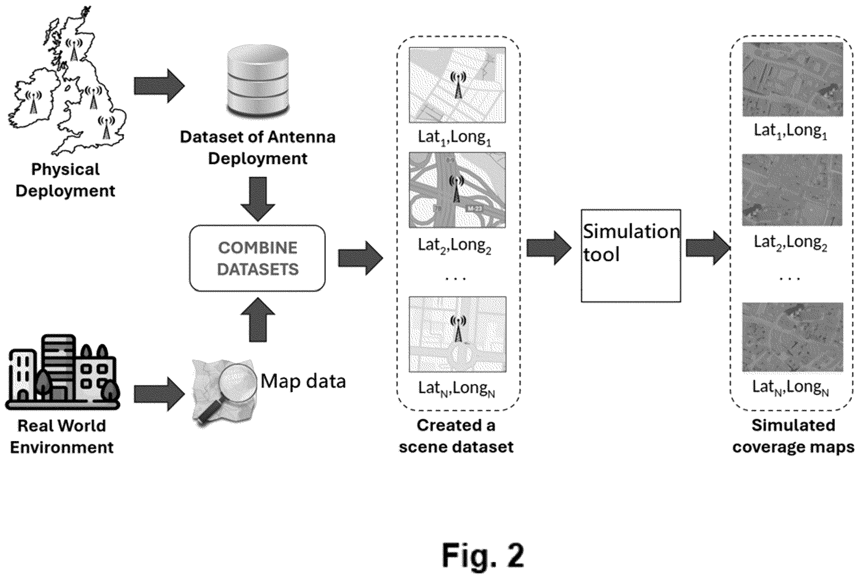

Fig. 2 shows a comprehensive view of the data collection and processing steps. On the left side, the acquisition of the antenna deployment and world environment datasets are illustrated. These datasets are then combined to form a new set of scenes for simulating in the ray tracing simulation tool. Each scene corresponds to a single antenna and includes the building information (e.g. from a 100x100 meters area) surrounding the antenna. In some embodiments, the scenes are converted to PLY format using Blender (https://www.blender.org/), and then they are exported to Mitsuba format, ready for simulation. Then, the invention leverages a simulation tool, such as Sionna RT, to load the scenes, configures the transmitter and receivers, and launches the simulation to obtain the final coverage map for each scene. This coverage map is the ground truth data, and it is going to be used to train the neural network model (e.g. a GNN model). The method particularly uses simulation data as it's more abundant and easier to obtain but note that the simulation map can be changed to or combined with empirical measurements.

### Graph Representation

Effectively capturing the wave propagation in a scene composed of 3D buildings with a neural network is challenging. Events like scattering and diffraction, caused by interactions between the radio waves and the 3D environment can significantly alter the coverage map. Effectively capturing these interactions is crucial for predicting realistic signal propagation, as they directly impact the resulting coverage map for the region.

Most of the existing work limit themselves to observing the scene from the top, converting the scene into a 2D image. Information such as building heights, materials or antenna orientation and tilt are represented as a 2D structure and are concatenated to the building map as a separate image channel. Then, they use neural architectures based on CNNs or multi-layer perceptron to predict RSS values for a given scene. Such methods fail to capture the wave propagation in the 3D environment, and they have a poor performance to generalize to other scenes where the building distribution changed.

The present invention uses a novel graph representation to learn the wave propagation among 3D structures using neural networks, particularly GNNs, although Transformers [19] or Graph Attention Networks [18] can be also used. The graph representation contains all the information from the scene used by the network simulator. Specifically, it converts the scenes to a point cloud with three kinds of points: buildings, transmitter and receivers. There is only one antenna point as there is a single antenna in the scene, there are multiple coverage points that cover the entire scene and the building points capture the buildings' locations and dimensions. The coverage points are obtained directly from the simulation tool and the building points can be obtained using Blender or equivalent methods that convert the 3D building representation to a point cloud matching the exact shape.

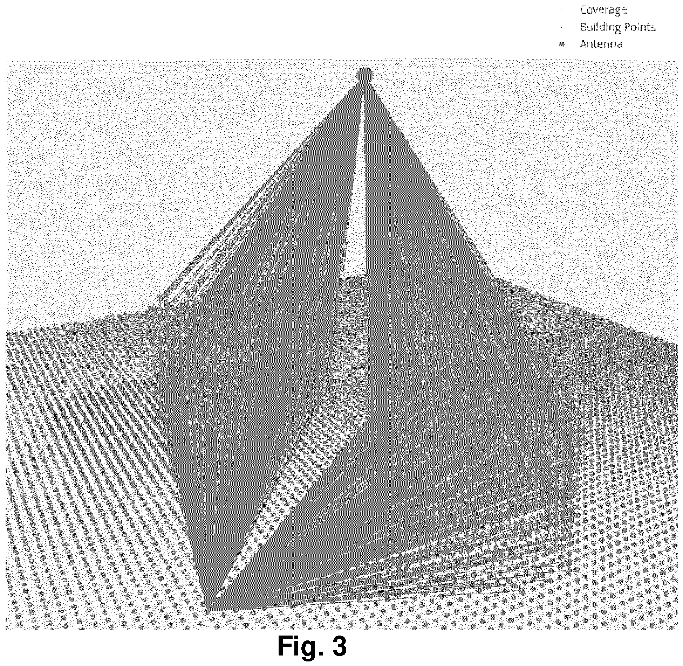

In the point cloud representation, all the spatial information is preserved and features such as materials and antenna configuration are attached to the points. Each point is then converted to a node with the same features attached. The method connects the transmitter, and coverage points to all the building points. Note that before it was explained that the invention predicts the coverage for a single position at a time. Therefore, given the position of the coverage point where one wants to make the prediction, in the graph representation the invention connects the corresponding coverage node to all the building nodes. This is called a sample. Fig. 3 shows the graph representation of a single sample (i.e., one coverage point) with all the edges connecting the relevant points. This graph representation is more suitable for modeling coverage maps as it captures better the 3D structure of the scene, mimicking what a ray tracer does.

### Feature Representation

The graph used in the proposed model comprises three types of nodes: antenna nodes, building nodes, and coverage nodes. The node type is encoded using a one-hot vector and each node records its orientation in 3D space via x, y, z coordinates, and more specifically using two angles, Alpha and beta. For antenna nodes, the orientation reflects the antenna's radiation direction. Building nodes are oriented by a vector perpendicular to the building's surface, while coverage nodes are assigned a fixed orientation pointing upwards along the positive z-axis. Each node can be associated with a hidden state of a given size (e.g. 32, among others) which is a tunable hyperparameter. This hidden state must be large enough to accommodate all the node's features and can be padded with zeros when necessary to meet the required size.

Edges in the graph are defined by several features that capture the relationship between connected nodes. These features particularly include the distance between the nodes, the angle Alpha and beta formed by their respective orientations, which helps the model assess whether the nodes are facing each other or oriented in different directions, and the free-space path loss (FSPL), representing signal attenuation over distance. Additionally, the features include the type of edge (i.e. antenna-to-coverage, antenna-to-building, or building-to-coverage), which in some particular embodiments is identified using a one-hot encoding.

Moreover, in some embodiments, for antenna-to-coverage and antenna-to-building edges there is also a feature that corresponds to the intersection of the edge with the antenna radiation pattern. For instance, this can be obtained by computing the antenna radiation pattern, tracing the link from antenna point to the building or coverage point, and taking the antenna gain in dB from the intersection with the radiation pattern as a feature. Additionally, for antenna-to-coverage edges, an additional feature is considered: a line-of-sight flag that indicates whether there is a direct, unobstructed path between the antenna and the coverage node.

These edge features allow the model to precisely represent and capture the interactions between nodes. Similarly, edges can also have hidden states of a given size (e.g. 32), that can be padded with zeros when necessary to maintain uniformity.

### Preliminary Results

In the following, the initial results of the proposed method to predict the RSS are discussed. To evaluate its performance, a dataset using a single scene was created and the antenna's orientation was systematically altered to face different parts of the scene. Specifically, the rotations of 0°, 90°, 180°, and 270° were used for training. Each rotation represents a distinct configuration where the antenna orientation changes while the rest of the scene remains unchanged.

For each configuration, the path gain across 6,000 coverage locations was simulated, uniformly distributed over the entire scene. Since path gain can be converted to RSS using standard formulas, this approach allowed training the model on comprehensive data. From the dataset, 70% of the locations were used for training and 30% for testing.

After training, the model was evaluated on unseen antenna rotations to test its ability to generalize. Specifically, the method was validated using rotations of 45°, 135°, 225°, and 315°, where the building structure of the scene remained constant, but the antenna faced new areas.

The results, summarized in table 1 below, indicate the model's performance in terms of mean absolute error (MAE) and mean percentage error (MPE) for the unseen rotations. The proposed method achieved an error rate below 10% relative to the simulated ground truth, demonstrating its potential to generalize across scenes with varying configurations.

**Table 1.**

| | | | | |
|---|---|---|---|---|
| Antena Rotation | 45 | 135 | 225 | 315 |
| Mean Absolute Error (dB) | 7.58 | 7.32 | 9.36 | 10.47 |
| Mean Absolute Percentage Error (%) | 6.8 | 7. | 8.85 | 9.6 |

Network operators can leverage the proposed method to efficiently deploy new antennas efficiently and at smaller time scales and at a lower cost. Leveraging the low inference times and the high accuracy of the GNN, the radio team can evaluate multiple antenna deployments with different configurations and locations/orientations using the proposed method. The objective would be to find the best configuration and location that fulfills some objective function (e.g., maximize the coverage for a specific area), reducing the time and costs to find the best deployment.

The inherent generalization capabilities of GNNs allow the radio planning team to train the proposed model with data from specific geographical areas (e.g., districts, cities), and evaluate it on different areas. For example, the proposed method could be trained with data from Madrid and used in London to plan the deployment of the new rollout of 5G antennas.

The proposed method aligns well with the digital twin concept by providing a virtual representation of radio network environments that can be used to optimize antenna deployments. This is because the 3D real-world environment can be represented in the proposed point cloud data representation together with all the relevant features (e.g., materials, antenna configuration). Therefore, the method can be used as a digital twin where different antenna configurations can be evaluated, without the need to alter the physical configuration.

The present invention has been described in particular detail with respect to specific possible embodiments. Those of skill in the art will appreciate that the invention may be practiced in other embodiments. For example, the nomenclature used for components, capitalization of component designations and terms, the attributes, data structures, or any other programming or structural aspect is not significant, mandatory, or limiting, and the mechanisms that implement the invention or its features can have various different names, formats, and/or protocols. Further, the system and/or functionality of the invention may be implemented via various combinations of software and hardware, as described, or entirely in software elements. Also, particular divisions of functionality between the various components described herein are merely exemplary, and not mandatory or significant. Consequently, functions performed by a single component may, in other embodiments, be performed by multiple components, and functions performed by multiple components may, in other embodiments, be performed by a single component.

Certain aspects of the present invention include process steps or operations and instructions described herein in an algorithmic and/or algorithmic-like form. It should be noted that the process steps and/or operations and instructions of the present invention can be embodied in software, firmware, and/or hardware, and when embodied in software, can be downloaded to reside on and be operated from different platforms used by real-time network operating systems.

The scope of the present invention is defined in the following set of claims.

### References

[1] "Atoll overview." https://www.forsk.com/atoll-overview. Accessed:2024-10-04.
[2] "Wireless insite® 3d wireless propagation software." https://www.remcom.com/wireless-insite-propagation-software. Accessed: 2024-10-04.
[3] J. Hoydis, F. Ait Aoudia, S. Cammerer, M. Nimier-David, N. Binder, G. Marcus, and A. Keller, "Sionna RT: Differentiable Ray Tracing for Radio Propagation Modeling," arXiv preprint, Mar. 2023.
[4] K. Rizk, J.-F. Wagen, and F. Gardiol, "Two-dimensional ray-tracing modeling for propagation prediction in microcellular environments," IEEE Transactions on Vehicular Technology, vol. 46, no. 2, pp. 508-518, 1997
[5] Y. Zhang and S. Wang, "K-nearest neighbors gaussian process regression for urban radio map reconstruction," IEEE Communications Letters, vol. 26, no. 12, pp. 3049-3053, 2022
[6] G. Zhang, X. Fu, J. Wang, X.-L. Zhao, and M. Hong, "Spectrum cartography via coupled block-term tensor decomposition," IEEE Transactions on Signal Processing, vol. 68, pp. 3660-3675, 2020.
[7] M. Kasparick, R. L. G. Cavalcante, S. Valentin, S. Sta'nczak, and M. Yukawa, "Kernel-based adaptive online reconstruction of coverage maps with side information," IEEE Transactions on Vehicular Technology, vol. 65, no. 7, pp. 5461-5473, 2016.
[8] R. Levie, 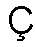 . Yapar, G. Kutyniok, and G. Caire, "Radiounet: Fast radio map estimation with convolutional neural networks," IEEE Transactions on Wireless Communications, vol. 20, no. 6, pp. 4001-4015, 2021.
[9] X. Zhang, X. Shu, B. Zhang, J. Ren, L. Zhou, and X. Chen, "Cellular network radio propagation modeling with deep convolutional neural networks," in Proceedings of the 26th ACM SIGKDD International Conference on Knowledge Discovery & Data Mining, KDD '20, (New York, NY, USA), p. 2378-2386, Association for Computing Machinery, 2020.
[10] E. Alimpertis, A. Markopoulou, C. Butts, and K. Psounis, "City-wide signal strength maps: Prediction with random forests," in The World Wide Web Conference, WWW'19, (New York, NY, USA), p. 2536-2542, Association for Computing Machinery, 2019.
[11] X. Li, S. Zhang, H. Li, X. Li, L. Xu, H. Xu, H. Mei, G. Zhu, N. Qi, and M. Xiao, "Radiogat: A joint model-based and data-driven framework for multi-band radiomap reconstruction via graph attention networks," arXiv preprint arXiv:2403.16397, 2024.
[12] S. Zhang, A. Wijesinghe, and Z. Ding, "Rme-gan: A learning framework for radio map estimation based on conditional generative adversarial network," IEEE Internet of Things Journal, vol. 10, no. 20, pp. 18016-18027, 2023.
[13] X. Han, L. Xue, F. Shao, and Y. Xu, "A power spectrum maps estimation algorithm based on generative adversarial networks for underlay cognitive radio networks," Sensors, vol. 20, no. 1, 2020.
[14] Y. Tian, S. Yuan, W. Chen, and N. Liu, "Transformer based radio map prediction model for dense urban environments," in 2021 13th International Symposium on Antennas, Propagation and EM Theory (ISAPE), vol. Volume1, pp. 1-3, 2021.
[15] "OpenStreetMap". OpenStreetMap. https://www.openstreetmap.org/#map=6/40.01/-2.49. Accessed 8 Oct. 2024.
[16] "Sionna RT." Sionna - Sionna 0.19.0 Documentation, https://nvlabs.github.io/sionna/index.html. Accessed 8 Oct. 2024.
[17] Gilmer, J., Schoenholz, S. S., Riley, P. F., Vinyals, O., & Dahl, G. E. (2017, July). Neural message passing for quantum chemistry. In International conference on machine learning (pp. 1263-1272). PMLR.
[18] Veličkovié, P., Cucurull, G., Casanova, A., Romero, A., Lio, P., & Bengio, Y. (2017). Graph attention networks. arXiv preprint arXiv:1710.10903.
[19] Vaswani, A. (2017). Attention is all you need. Advances in Neural Information Processing Systems.

## Claims

1. A method for computing radio coverage maps, the method comprising performing by one or more processors the following steps:
generating at least one geographic area scene by combining a first dataset comprising information regarding location, orientation, and/or configuration information of different antennas deployed in a given area with a second dataset comprising details about a real environment of the given area, wherein the generated geographic area scene comprises a single antenna, several buildings surrounding the antenna, and a plurality of receivers; and
obtaining a 3D coverage map for the at least one geographic area scene using a neural network that:
converts the geographic area scene to a point cloud with different types of points, including a point for the single antenna, a coverage point for each receiver covering the geographic area scene and building points capturing the buildings' location and dimensions;
converts each point of the point cloud into a node, providing an antenna node, building nodes, and coverage nodes as a result;
connects the single antenna node and the coverage nodes to all the building nodes;
encodes each node type using a one-hot vector, and records an orientation of each node using both an alpha and beta angle; and
defines edges of the 3D coverage map using different features that capture a relationship between connected nodes.

2. The method of claim 1, wherein the neural network comprises a Graph Neural Network, a Transformer or a Graph Attention Network.

3. The method of any one of the previous claims, wherein the neural network further comprises attaching spatial information and features, including materials and antenna configuration, to the points of the point cloud.

4. The method of any one of the previous claims, further comprising generating a received signal strength, RSS, map for the at least one geographic area scene by simulating the propagation of radio waves within the at least one geographic area scene using a ray tracing simulation tool.

5. The method of claim 4, wherein RSS values of the RSS map are obtained individually, for each receiver or coverage point at a time.

6. The method of any one of the previous claims, wherein for antenna nodes, the orientation reflects the antenna's radiation direction; building nodes are oriented by a vector perpendicular to a building's surface; and coverage nodes are assigned a fixed orientation pointing upwards along a positive z-axis.

7. The method of any one of the previous claims, wherein all types of edges in the 3D coverage map comprise: a type of edge including antenna-to-coverage, antenna-to-building, or building-to-coverage that is identified using a one-hot encoding, a distance between the nodes, the angle alpha and angle beta formed by their respective orientations, and a free-space path loss.

8. The method of claim 7, wherein the antenna-to-building edges further comprise a feature corresponding to an intersection of the edge with an antenna radiation pattern, and wherein the antenna-to-coverage edges further comprise the feature corresponding to the intersection of the edge with the antenna radiation pattern and a line-of-sight flag feature.

9. The method of any one of the previous claims, further comprising associating a tunable hyperparameter to each node.

10. The method of any one of the previous claims, further comprising padding the nodes with zeros.

11. The method of claim 8, comprising obtaining an antenna radiation pattern feature by tracing a link from the antenna node to the building or coverage node and by taking the antenna gain from the intersection with the antenna radiation pattern as a feature.

12. The method of any one of the previous claims, wherein before obtaining the RSS maps, the at least one geographic area scene is converted to a specific file format and further exported to a specific simulation format.

13. The method of any one of the previous claims, wherein the several buildings are obtained from a mapping platform that contains a shape, location and material of the buildings.

14. A system for computing radio coverage maps, comprising a memory and at least one processor, wherein the at least one processor is configured to:
generate at least one geographic area scene by combining a first dataset comprising information regarding location, orientation, and/or configuration information of different antennas deployed in a given area with a second dataset comprising details about a real environment of the given area, wherein the generated geographic area scene comprises a single antenna, several buildings surrounding the antenna, and a plurality of receivers;
obtain a 3D coverage map for the at least one geographic area scene using a neural network that:
converts the geographic area scene to a point cloud with different types of points, including a point for the single antenna, a coverage point for each receiver covering the geographic area scene and building points capturing the buildings' location and dimensions;
converts each point of the point cloud into a node, providing an antenna node, building nodes, and coverage nodes as a result;
connects the single antenna node and the coverage nodes to all the building nodes;
encodes each node type using a one-hot vector, and records an orientation of each node using both an alpha and beta angle; and
defines edges of the 3D coverage map using different features that capture a relationship between connected nodes..

15. A non-transitory computer readable medium including code instructions that when executed in a computer system implement the steps of the method of any one of claims 1 to 13.
